# EUROPÄISCHE PATENTSCHRIFT

(11) **EP 1 395 154 B1**
(45) Veröffentlichungstag und Bekanntmachung des Hinweises auf die Patenterteilung: **22.09.2004**
(21) Anmeldenummer: 02738082.3
(22) Anmeldetag: 17.05.2002
(51) Int. Cl.: A47J 27/21

(54) **ELEKTRISCHER WASSERKOCHER ZUM AUFHEIZEN VON WASSER**
ELECTRIC KETTLE FOR HEATING WATER
BOUILLOIRE ELECTRIQUE PERMETTANT DE CHAUFFER DE L'EAU

(30) Priorität: 09.06.2001 DE 10128058
(43) Veröffentlichungstag der Anmeldung: 10.03.2004
(73) Patentinhaber: Braun GmbH, 61476 Kronberg (DE)
(72) Erfinder: KRESSMANN, Frank, 65760 Eschborn (DE)
(86) Internationale Anmeldenummer: PCT/EP2002/005439
(87) Internationale Veröffentlichungsnummer: WO 2002/100223

(56) Entgegenhaltungen:
- WO-A-01/56436
- PATENT ABSTRACTS OF JAPAN vol. 015, no. 104 (C-0814), 13. März 1991 (1991-03-13) & JP 03 001824 A (MATSUSHITA ELECTRIC IND CO LTD), 8. Januar 1991 (1991-01-08)
- PATENT ABSTRACTS OF JAPAN vol. 1996, no. 08, 30. August 1996 (1996-08-30) & JP 08 107824 A (MATSUSHITA ELECTRIC IND CO LTD), 30. April 1996 (1996-04-30)
- PATENT ABSTRACTS OF JAPAN vol. 1998, no. 14, 31. Dezember 1998 (1998-12-31) & JP 10 257968 A (TOSHIBA HOME TECHNOL CORP), 29. September 1998 (1998-09-29)

## Beschreibung

Die Erfindung betrifft ein Verfahren zum Regeln des Aufheizvorgangs von Flüssigkeit bei einem elektrischen Wasserkocher.

Von einem Wasserkocher zum Aufheizen von Wasser können bei einem Überhitzen des elektrischen Heizelements Gefahren ausgehen. Insbesondere kann es durch Anhäufen von thermischer Energie, beispielsweise beim Trockenlaufen des Wasserkochers, zu Bränden kommen oder ein Benutzer kann Verbrennungen o.ä. Verletzungen erleiden.

Aus dem Stand der Technik sind eine Vielzahl von elektrisch betriebenen Wasserkochern bekannt. Schon lange sind für derartige Wasserkocher Schmelzsicherungen, Bimetallsensoren oder andere mechanische Sensoren als Übertemperaturschutz bekannt. In Wasserkochern ist es auch üblich, den Trockenlaufschutz durch das Erreichen der Übertemperatur zu realisieren.

So ist in der EP 0 380 369 A1 ein Schutzverfahren für einen Wasserkocher gemäß dem Oberbegriff des Patentanspruchs 1 dargestellt. Das dort beschriebene Verfahren ist auf eine Übertemperaturerkennung und einen Trockenlaufschutz gerichtet. Der Trockenlaufschutz wird dabei durch das Berechnen des Temperaturanstiegs an der Heizplatte abgeleitet. Ein zu hoher Anstieg der Heizplattentemperatur wird dabei als Signal für einen gering oder gar nicht mit Flüssigkeit gefüllten Kessel gewertet. Ist jedoch der Sensor, der die Temperaturwerte für die Ermittlung des Trockenlaufschutzes ermitteln soll, defekt und liefert trotz eingeschaltetem Heizelement konstante Temperaturwerte, dann wird der Trockenlaufschutz gemäß der EP 0 380 369 A1 nicht ansprechen. Außerdem wird in diesem Fall eine Übertemperatur auch nicht erkannt.

Der beschriebene Stand der Technik weist weitere Nachteile auf. So ist es nachteilig, daß bei dem bekannten Trockenlaufschutz gemäß EP 0 380 369 A1 zunächst eine definierte Übertemperatur erreicht werden muß, bevor der Wasserkocher abschaltet. Oft wird sogar noch über diese Temperatur hinaus aufgeheizt, da die entsprechenden Temperatursensoren nicht direkt an dem Heizelement angeordnet sind. Daher entsteht am Sensor noch eine höhere Temperatur, bis das thermische Gefälle rund um das Heizelement ausgeglichen ist. Auch die Sicherheitsabschaltung durch eine Schmelzsicherung erfolgt erst, wenn in das System deutlich mehr thermische Energie eingebracht wurde, als im Nennbetrieb auftritt.

Ein Trockenlaufschutz anhand des gemessenen Temperaturanstiegs und anhand der Übertemperatur am Heizelement ist daher einem Trockenlaufschutz durch alleiniges Messen einer Übertemperatur vorzuziehen. Aber dennoch setzen alle bekannten Sicherheitseinrichtungen für entsprechende Heizelemente funktionierende Sensoren voraus.

Ein Weiteres Verfahren ist aus JP-A-03001824 bekannt.

Der vorliegenden Erfindung liegt daher die Aufgabe zugrunde, ein verbessertes Verfahren zum Aufheizen von Wasser zur Verfügung zu stellen. Dabei sollen die o.g. Nachteile des Standes der Technik vermieden werden. Insbesondere soll das Erkennen und Reagieren auf eine Fehlfunktion des Heizelements oder der elektronischen Regelung einfach und sicher möglich sein. Dabei soll in dem Wasserkocher ein Systemverhalten hinsichtlich der Sicherheit werksseitig bereits eingegeben sein.

Diese Aufgabe wird einerseits durch das Verfahren mit den Merkmalen des Patentanspruchs 1 gelöst. Vorteilhafte Ausgestaltungen der Erfindung werden in den Unteransprüchen beschrieben.

Ein erfindungsgemäßes Verfahren zum Regeln eines Aufheizvorgangs für einen Wasserkocher weist die Verfahrensschritte nach Patentanspruch 1 auf. Hierdurch wird das Erkennen und Reagieren auf eine Fehlfunktion des Heizelements oder der elektronischen Regelung einfach und sicher möglich.

Eine besonders vorteilhafte Weiterbildung des Verfahrens nach Patentanspruch 1 weisen die Merkmale des Patentanspruchs 2 auf. Durch Hinzufügen eines derartigen Verfahrensschritts, wird der Benutzer beispielsweise durch blinkende Leuchtdioden oder einen lauten Summton auf eine erforderliche Überprüfung des Geräts durch eine Servicewerkstatt hingewiesen.

Eine weitere vorteilhafte Weiterbildung des Verfahrens nach Patentanspruch 1 weisen die Merkmale des Patentanspruchs 3 auf. Dabei kann die Messung des Flüssigkeitsstands beispielsweise mittels eines Schwimmers mechanisch oder wie oben bereits beschrieben, erfolgen. Das so erfaßte Meßsignal wird dann beispielsweise durch ein Potentiometer in ein elektrisches Signal gewandelt. Nach einer Analog-Digital-Wandlung des Signals, kann dieses dann im elektronischen Speicher abgelegt werden.

Noch eine vorteilhafte Weiterbildung des Verfahrens nach Patentanspruch 1 weisen die Merkmale des Patentanspruchs 4 auf. Dabei ist beispielsweise eine zusätzliche Sensorik zum Messen des Umgebungsluftdrucks hilfreich, um die jeweilige Siedetemperatur Tₘₐₓ und den maximalen Zeitpunkt tₘₐₓ, an dem die Siedetemperatur erreicht wird, zu ermitteln. Auch der Zeitpunkt tₜₒₜ für die Messung des anfänglichen Temperaturanstiegs kann dabei an individuelle Gegebenheiten angepaßt werden.

Eine vorteilhafte Weiterbildung des Verfahrens nach Patentanspruch 1 weisen die Merkmale des Patentanspruchs 5 auf. Durch die Aufnahme zusätzlicher Kenndaten können die berechneten Soll-Werte mit geringen Toleranzen ausgestattet werden. Dies trägt zu einem niedrigeren Energieverbrauch und somit zu einem kostengünstigen Betrieb bei. Femer kann beispielsweise durch entsprechende Sensorik die Wasserhärte ermittelt werden, was Rückschlüsse auf den Verkalkungszustand des Geräts zuläßt.

Schließlich weist eine weitere vorteilhafte Weiterbildung des Verfahrens nach Patentanspruch 1 die Merkmale des Patentanspruchs 6 auf. Hierdurch wird verhindert, daß ein Wasserkocher trotz schwerwiegender Fehlfunktionen über längere Zeit weiter betrieben wird. Insbesondere kann eine unzulässige Manipulation des Wasserkochers verhindert werden, die beispielsweise zum Ziel hat, einen defekten Wasserkocher weiter zu betreiben. Ein derartiger Geräteschutz blockiert das Einschalten des Wasserkochers, wenn ein entsprechender Fehler besonders häufig auftritt und erlaubt den weiteren Betrieb nur, wenn der Fehlerspeicher in einer Servicewerkstatt nach erfolgter Reparatur zurückgesetzt worden ist.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1: ein Flußdiagramm, das schematisch ein Verfahren zum Regeln eines Aufheizvorgangs für einen Wasserkocher darstellt;
- Fig. 2: ein Diagramm, welches den Verlauf der Temperatur T über der Zeit t in einem Wasserkocher darstellt.

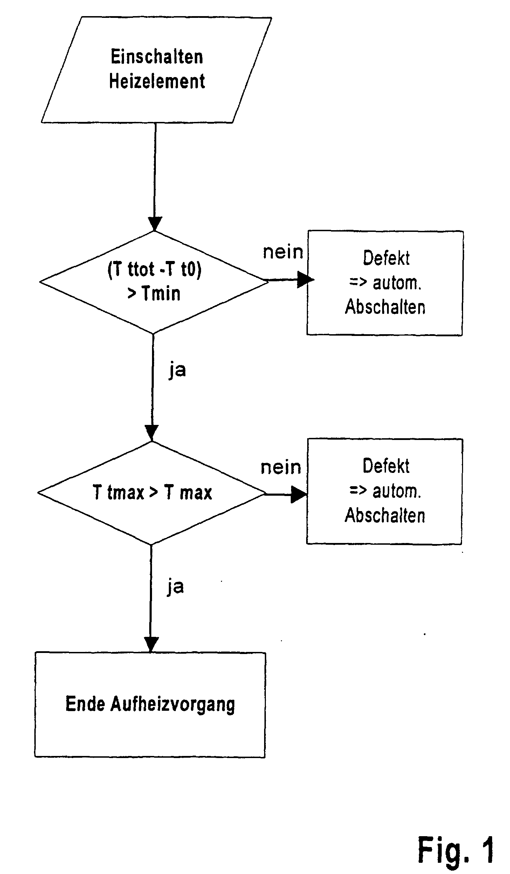

Ein vorteilhaftes Verfahren zum Regeln eines Aufheizvorgangs für einen Wasserkocher gemäß der vorliegenden Erfindung wird im folgenden beispielhaft anhand des Flußdiagramms in Fig. 1 beschrieben. Dabei weist der Wasserkocher ein elektrisches Heizelement mit einer elektronischen Regelung (nicht dargestellt) auf, die über Sensoren Temperatur und Aufheizzeit erfaßt. Die Regelung weist ferner einen nicht flüchtigen elektronischen Speicher (nicht dargestellt) auf, in dem vordefinierte Kennfelddaten zum Verifizieren der Sensorinformation gespeichert sind.

Im vorliegenden Ausführungsbeispiel sind im elektronischen Speicher der Regelung folgende Kennfelddaten gespeichert:
1. Zeit tₜₒₜ; Nach dem Einschalten des Heizelements muß nach einem bestimmten Zeitintervall tₜₒₜ - t₀, selbst bei maximal mit Flüssigkeit befülltem Wasserkessel, ein Temperaturanstieg zu verzeichnen sein. Ist dies nicht der Fall, dann kann das zwei mögliche Ursachen haben. Zum einen kann das Heizelement defekt sein. Zum anderen kann der Sensor defekt sein. Im ersten Fall bewirkt dies lediglich, daß ein entsprechendes Aufheizen nicht stattfindet. Im Falle eines Versagen des Sensors jedoch kann die Fehlfunktion zu einem Überhitzen und dadurch bedingten Ausfall des Gerätes führen. Außerdem kann in diesem Fall ein unbemerktes Trockenlaufen des Gerätes stattfinden, d.h., der Wasserkocher heizt auf, ohne daß ausreichend Wasser vorhanden ist. Dies alles kann zu einem Brand oder zu Verletzungen des Benutzers führen. In beiden Fällen handelt es sich um eine Fehlfunktion des Wasserkochers. Daher ist es in diesen Fällen unbedingt notwendig, daß das Heizelement sofort abgeschaltet wird. Zusätzlich zum automatischen Abschalten des Heizelements kann eine akustische oder optische Fehleranzeige erfolgen, damit der Benutzer auf den Gerätezustand hingewiesen wird und entsprechende Maßnahmen einleiten kann.
2. Siedetemperatur Tₘₐₓ; Abhängig von den Umgebungsbedingungen kann die Siedetemperatur berechnet und im Speicher abgelegt werden.
3. Zeit tₘₐₓ; Femer kann selbst bei voll befülltem Heizgerät und minimal zulässiger Umgebungstemperatur eine maximale Zeit tₘₐₓ für den Aufheizvorgang bestimmt werden. Diese berechnete Zeit tₘₐₓ kann bei den Kennfelddaten abgelegt werden. Wenn bei eingeschaltetem Wasserkocher die Zeit tₘₐₓ abgelaufen ist, ohne daß die Siedetemperatur Tₘₐₓ erreicht wurde, wird der Wasserkocher automatisch abgeschaltet. In diesem Fall liegt eine Fehlfunktion vor, die zu einem Brand oder zu Verletzungen eines Bedieners führen kann.

Das in Fig. 1 dargestellte Verfahren zum Regeln des Aufheizvorgangs für einen elektrischen Wasserkocher, läßt sich dabei wie folgt zusammenfassen:
a) Einschalten des Heizelements des Wasserkochers. Dies erfolgt i.d.R. durch Betätigen des Geräteeinschaltschalters;
b) automatische Messung des Temperaturanstiegs ΔT während einer vorgegebenen Zeit tₜₒₜ-t₀ durch die elektronische Regelung und deren Temperatursensoren;
b1) wenn der gemessene Temperaturanstieg ΔT größer als Tₘᵢₙ ist, weiter mit Verfahrensschritt c); oder
b2) wenn der gemessene Temperaturanstieg ΔT gleich oder kleiner Tₘᵢₙ ist, automatisches Abschalten des Heizelements durch die Regelautomatik;
c) automatisches Messen der Temperatur Ttₘₐₓ zur Zeit tₘₐₓ, die im elektronischen Speicher der Regelung abgelegt ist;
c1) wenn Ttₘₐₓ gleich oder größer einer gespeicherten Temperatur Tₘₐₓ ist, weiter mit Verfahrensschritt d); oder
c2) Wenn die gemessene Temperatur Ttₘₐₓ kleiner einer gespeicherten Temperatur Tₘₐₓ ist, automatisches Abschalten des Heizelements durch die elektronische Regelung;
d) Reguläres Beenden des Aufheizvorgangs, wenn die Siedetemperatur erreicht und für einen vordefinierten Zeitraum gehalten worden ist.

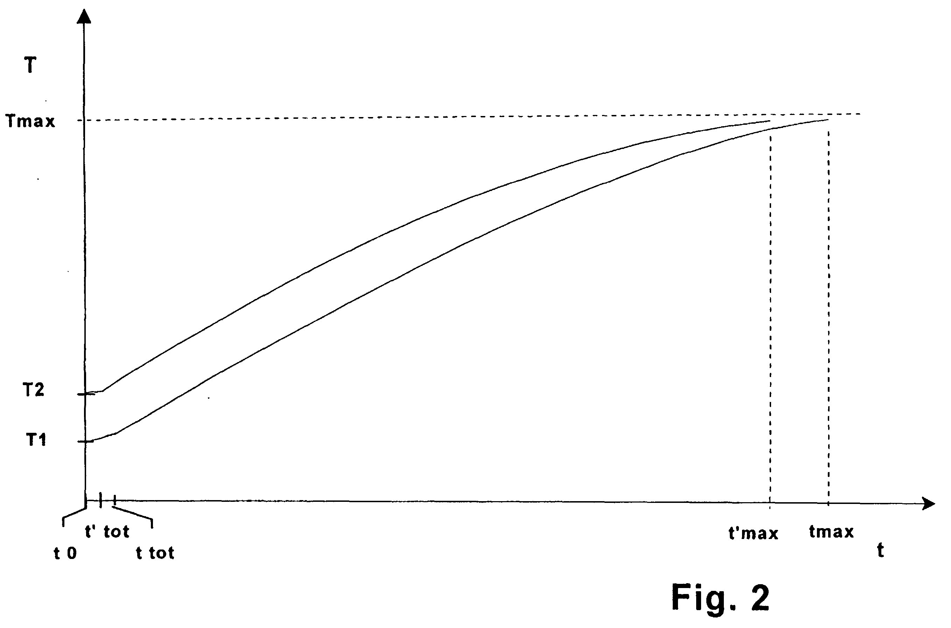

Fig. 2 zeigt ein Diagramm, in dem schematisch die Temperatur des Wassers über der Zeit aufgetragen ist. Dabei ist der Verlauf zweier Beispielkurven dargestellt. Die Zeiten tₜₒₜ und tₘₐₓ sind dabei die für eine Ausgangstemperatur T1 des Wassers berechneten Werte. Die Zeiten t'ₜₒₜ und t'ₘₐₓ sind dabei die für eine gegenüber der Ausgangstemperatur T1 höhere Ausgangstemperatur T2 des Wassers berechnete Werte.

Wie dem Diagramm in Fig. 2 entnommen werden kann, steigt die Flüssigkeitstemperatur in beiden Fällen, d.h. im Falle der Ausgangstemperatur T1 und im Falle der Ausgangstemperatur T2, zunächst im Zeitintervall t₀ - tₜₒₜ bzw. t₀ - t'ₜₒₜ leicht an. Ist in diesem Intervall kein meßbarer Temperaturanstieg zu verzeichnen, so kann das mehrere Ursachen haben. Zum einen kann das Heizelement defekt sein, d.h. es findet tatsächlich keine Erwärmung des Wassers statt. Zum anderen kann der Temperatursensor defekt sein, d.h. das Wasser wird erwärmt, die Zustandsänderung wird aber meßtechnisch nicht erfaßt.

Während im ersten Fall ein offensichtlicher Defekt vorliegt, kann der Defekt im zweiten Falle gravierende Folgen haben. Da keine Temperaturinformation erfaßt wird, findet keine Regelung mehr statt. Dies kann zum Überhitzen, Trockenlaufen oder sogar zu einem Brand führen. Der nichts ahnende Benutzer kann sich an dem überhitzten Wasserkocher schwerste Verbrennungen zuziehen. Daher ist erfindungsgemäß ein sofortiges Abschalten des Wasserkochers für beide Fälle vorgesehen. Zusätzlich wird durch eine optische oder akustische Anzeige auf den Defekt aufmerksam gemacht.

Sollte im Zeitintervall t₀ - tₜₒₜ kein Defekt aufgetreten sein, so steigen die Temperaturkurven, wie in Fig. 2 dargestellt, stetig an, bis sie sich einer Siedetemperatur Tₘₐₓ annähern.

Sollten die Temperaturkurven die Siedetemperatur Tₘₐₓ zu einem Zeitpunkt tₘₐₓ (für eine Ausgangstemperatur T1) oder zu einem Zeitpunkt t'ₘₐₓ (für eine Ausgangstemperatur T2) erreichen, dann wird der Aufheizvorgang regulär beendet.

Sollte jedoch die Temperatur T zum Zeitpunkt tₘₐₓ bzw t'ₘₐₓ nicht gleich der Siedetemperatur Tₘₐₓ sein, dann liegt ein Defekt vor. Entweder reicht dann die Leistung des Heizelements nicht aus, um die Flüssigkeit auf die Siedetemperatur zu erhitzen (dies kann beispielsweise bei verkalktem oder anderweitig beschädigtem Heizelement der Fall sein) oder aber der Sensor liefert keine verläßliche Temperaturinformation (dies kann beispielsweise der Fall sein, wenn ein Wackelkontakt die Signalleitung unterbricht, wenn der Sensor falsch kalibriert ist oder wenn der Sensor vollständig ausgefallen ist).

In beiden Fällen wird das Gerät sofort abgeschaltet, da insbesondere bei Ausfall des Sensors eine Überhitzung mit den oben geschilderten Folgen auftreten kann. Auch hier wird der Benutzer über optische oder akustische Einrichtungen über den Defekt informiert.

## Patentansprüche

1. Verfahren zum Regeln eines Aufheizvorgangs zum Aufheizen von Wasser bei einem elektrischen Wasserkocher, der ein elektrisches Heizelement aufweist, das durch eine elektronische Regelung steuerbar ist, wobei Sensoren zum Erfassen von Temperatur und Aufheizzeit vorgesehen sind und wobei das Verfahren folgende Schritte aufweist:
a) Einschalten eines Heizelements;
b) Messen des Temperaturanstiegs ΔT in einem vorgegebenen Zeitintervall tₜₒₜ-t₀;
b1) wenn der gemessene Temperaturanstieg ΔT größer als Tₘᵢₙ ist, weiter mit Verfahrensschritt c); oder
b2) wenn der gemessene Temperaturanstieg ΔT gleich oder kleiner Tₘᵢₙ ist, Abschalten des Heizelements;
c) Messen der Temperatur Ttₘₐₓ zur Zeit tₘₐₓ
c1) wenn Ttₘₐₓ gleich oder größer einer gespeicherten Temperatur Tₘₐₓ ist, weiter mit Verfahrensschritt d); oder
c2) wenn die gemessene Temperatur Ttₘₐₓ kleiner einer gespeicherten Temperatur Tₘₐₓ ist, Abschalten des Heizelements;
d) Reguläres Beenden des Aufheizvorgangs.

2. Verfahren nach Anspruch 1, welches femer folgende Schritte aufweist:
Akustische oder optische Anzeige einer Fehlfunktion im Falle der Schritte b2) und c2).

3. Verfahren nach Anspruch 1, welches femer folgende Schritte aufweist:
vor dem Einschalten des Heizelements, Messen des Flüssigkeitsfüllstands und ablegen des ermittelten Wertes im elektronischen Speicher der Regelung.

4. Verfahren nach Anspruch 1, weiches ferner folgende Schritte aufweist:
nach jedem regulären Beenden des Aufheizvorgangs gemäß Verfahrensschritt d), Anpassen der gespeicherten Kenndaten tₜₒₜ, tₘₐₓ und Tₘₐₓ an den Gerätezustand bzw. an den Betriebsort

5. Verfahren nach Anspruch 1, welches ferner folgende Schritte aufweist:
Messen und abspeichem weiterer Kenndaten, insbesondere Leistungsaufnahme des Heizelements über der Zeit, Temperaturverlauf am Sensor über der Zeit sowie erste und mehrfache Ableitungen der gemessenen Werte über der Zeit.

6. Verfahren nach Anspruch 1, welches femer folgende Schritte aufweist:
Protokollieren von Systemfehlern, wobei bei erneutem Aufheizen immer wieder auftretende Fehler bis zu einer vorbestimmten Häufigkeit toleriert werden, bevor ein Rücksetzen des Fehlerspeichers erforderlich wird, damit der Wasserkocher wieder eingeschaltet werden kann.

## Claims

1. A method for regulating a heating process for heating water in an electric kettle comprising an electric heating element which can be controlled by an electronic regulator, wherein sensors for detecting the temperature and the duration of heating are provided, with the method comprising the following steps:
a) Switching-on of a heating element;
b) Measurement of the temperature increase ΔT at a predetermined time interval tₜₒₜ-t₀;
b1) If the measured temperature increase ΔT is greater than Tₘᵢₙ, continue with process step c); or
b2) If the measured temperature increase ΔT is equal to, or smaller than, Tₘᵢₙ, switch-off of the heating element;
c) Measurement of the temperature Ttₘₐₓ at the time tₘₐₓ;
c1) If Ttₘₐₓ is equal to or larger than a stored temperature Tₘₐₓ, continue with process step d); or
c2) If the measured temperature Ttₘₐₓ is smaller than a stored temperature Tₘₐₓ, switch-off of the heating element; and
d) Regular ending of the heating process.

2. The method according to claim 1, which further comprises the following steps:
Acoustic or visual signalling of a malfunction in the case of steps b2) and c2).

3. The method according to claim 1, which further comprises the following steps:
Prior to switching on the heating element, measurement of the liquid fill level and storage of the determined value in the electronic memory of the regulator.

4. The method according to claim 1, which further comprises the following steps:
After each regular ending of the heating process according to step d), adaptation of the stored characteristic data tₜₒₜ, tₘₐₓ and Tₘₐₓ to the appliance state or to the place of operation.

5. The method according to claim 1, which further comprises the following steps:
Measurement and storage of further characteristic data, in particular power consumption of the heating element over time, temperature gradient at the sensor over time, as well as initial and multiple derivations of the measured values over time.

6. The method according to claim 1, which further comprises the following steps:
Logging of system errors, wherein during renewed heating, recurring errors are tolerated up to a predetermined frequency before resetting of the error memory becomes necessary for the electric kettle to be able to be switched on again.

## Revendications

1. Procédé destiné à réguler la phase de chauffage pour chauffer l'eau dans une bouilloire à eau électrique qui comprend un élément chauffant électrique pouvant être commandé par une régulation électronique, des capteurs étant prévus pour le relevé de la température et de la durée de chauffage, et le procédé présentant les étapes suivantes :
a) mise en marche d'un élément chauffant ;
b) mesure de l'accroissement de température ΔT sur un intervalle de temps prédéterminé tₜₒₜ-t₀ ;
b1) si l'accroissement de température ΔT mesuré est supérieur à Tₘᵢₙ, poursuite par l'étape de procédé c) ; ou
b2) si l'accroissement de température ΔT mesuré est égal ou inférieur à Tₘᵢₙ, arrêt de l'élément chauffant ;
c) mesure de la température Ttₘₐₓ à l'instant tₘₐₓ ;
c1) si Ttₘₐₓ est égale ou supérieure à une température Tₘₐₓ mémorisée, poursuite par l'étape de procédé d) ; ou
c2) si la température Ttₘₐₓ mesurée est inférieure à une température Tₘₐₓ mémorisée, arrêt de l'élément chauffant ;
d) achèvement régulier de la phase de chauffage.

2. Procédé selon la revendication 1, qui comprend par ailleurs les étapes suivantes :
indication acoustique ou optique d'une fonction d'erreur ou de défaut dans le cas des étapes b2) et c2).

3. Procédé selon la revendication 1, qui comprend par ailleurs les étapes suivantes :
avant la mise en marche de l'élément chauffant, mesure du niveau de remplissage de liquide et stockage de la valeur déterminée, dans la mémoire électronique de la régulation.

4. Procédé selon la revendication 1, qui comprend par ailleurs les étapes suivantes :
après chaque achèvement régulier de la phase de chauffage selon l'étape de procédé d), adaptation des données caractéristiques mémorisées tₜₒₜ, tₘₐₓ, et Tₘₐₓ à l'état de l'appareil et respectivement au lieu d'utilisation.

5. Procédé selon la revendication 1, qui comprend par ailleurs les étapes suivantes :
mesure et mémorisation d'autres données caractéristiques, notamment la puissance absorbée par l'élément chauffant en fonction du temps, la loi de variation de la température au niveau du capteur en fonction du temps, ainsi que la dérivée première et des dérivées multiples des valeurs mesurées en fonction du temps.

6. Procédé selon la revendication 1, qui comprend par ailleurs les étapes suivantes :
établissement de protocole d'erreurs de système, des erreurs ou défauts apparaissant de manière répétée à chaque nouveau chauffage étant tolérés jusqu'à une fréquence prédéterminée, avant la nécessité d'une remise à zéro de la mémoire d'erreurs, pour pouvoir remettre en marche la bouilloire à eau.
